Europäisches Patentamt

European Patent Office

Office européen des brevets

(11) Numéro de publication: **0 266 259 B1**

# (12) FASCICULE DE BREVET EUROPEEN

(45) Date de publication de fascicule du brevet:
**11.09.91**

(51) Int. Cl.⁵: **A01D 46/28**

(21) Numéro de dépôt: **87402310.4**

(22) Date de dépôt: **16.10.87**

(54) **Machine pour la récolte des fruits, baies et similaires portés par des arbres et arbustes fruitiers plantés en ligne.**

(30) Priorité: **27.10.86 FR 8614878**

(43) Date de publication de la demande:
**04.05.88 Bulletin 88/18**

(45) Mention de la délivrance du brevet:
**11.09.91 Bulletin 91/37**

(84) Etats contractants désignés:
**DE ES GB IT**

(56) Documents cités:
**FR-A- 1 570 246**
**FR-A- 2 199 436**
**FR-A- 2 342 019**
**FR-A- 2 516 742**
**FR-A- 2 522 246**

(73) Titulaire: **HESSTON BRAUD**

**F-85220 COEX(FR)**

(72) Inventeur: **Merant, Jean-Camille**
**Le Portail Meigne**
**F-49700 Doue la Fontaine(FR)**
Inventeur: **Deux, Alain**
**395 rue St. Léonard**
**F-49000 Angers(FR)**

(74) Mandataire: **Lefebure, Gérard et al**
**Office Blétry 2, boulevard de Strasbourg**
**F-75010 Paris(FR)**

## Description

La présente invention concerne une machine pour la récolte des fruits, baies et similaires portés par des arbres et arbustes fruitiers plantés en ligne, du type comprenant un châssis enjambeur mobile à travers champs, et au moins un ensemble de secouage comportant deux supports sensiblement verticaux et longitudinaux, qui sont espacés transversalement l'un de l'autre et situés respectivement de part et d'autre de l'axe médian longitudinal de la machine, chacun des deux supports étant monté mobile par rapport au châssis et portant un jeu d'organes secoueurs de forme allongée, espacés verticalement et s'étendant en gros horizontalement dans la direction dudit axe médian longitudinal, chaque organe secoueur étant constitué par une tige dont les deux extrémités sont attachées à l'un des deux supports et qui a une forme telle qu'elle définit avec les tiges attachées à l'autre support, de l'avant vers l'arrière de la machine, un convergent d'entrée, une zone active de secouage et un divergent de sortie pour les arbres et arbustes fruitiers, et un mécanisme de commande relie auxdits supports pour les animer en synchronisme d'un mouvement de va-et-vient dans une direction transversale par rapport audit axe médian longitudinal.

L'invention concerne notamment, mais non exclusivement, la récolte des raisins, et elle sera plus particulièrement décrite à propos de ce type de récolte, bien que la machine de la présente invention puisse être également utilisée pour la récolte d'autres fruits et baies, comme par exemple les cassis, les groseilles, les framboises ou encore les grains de café.

Le principe de récolte des raisins est pratiquement le même pour la plupart des machines à vendanger connues. Il s'agit de secouer ou de battre la vigne en lui imprimant un mouvement sinusoïdal ou pseudosinusoïdal d'une certaine amplitude et d'une certaine fréquence propres à détacher les raisins ou les grappes de raisin. Ce mouvement est communiqué à la vigne par des organes secoueurs ou batteurs disposés de manière à agir soit sur les ceps ou pied de vigne, soit sur la végétation, c'est-à-dire dans la zone fructifère de la vigne, selon le type et le nombre d'organes secoueurs ou batteurs utilisés. Le pourcentage des grappes et/ou des grains de raisin qui sont détachés de la vigne dépend du nombre et de l'amplitude des oscillations auxquelles une grappe donnée de raisin est soumise. Plus une grappe donnée de raisin est secouée énergiquement et un grand nombre de fois, plus ladite grappe ou ses grains individuels ont des chances d'être détachés de la vigne. Le nombre et l'amplitude des oscillations auxquelles une grappe donnée de raisin est soumise dépendent eux mêmes de divers paramètres pouvant être sélectionnés, notamment l'amplitude et la fréquence du mécanisme de commande associé aux organes secoueurs ou batteurs, la longueur de la zone active desdits organes secoueurs ou batteurs, la rigidité ou la flexibilité de ceux-ci et la vitesse d'avance de la machine, et d'autres facteurs imposés par la vigne elle-même, notamment son mode de conduite, sa forme et la résistance qu'elle oppose aux mouvements des organes secoueurs ou batteurs. Quoi qu'il en soit, pour obtenir un bon pourcentage de grappes et/ou de grains de raisin récoltés, il est important que toutes les grappes de raisin à tous les niveaux de la végétation soient bien soumises à l'action des organes secoueurs.

Dans les machines à vendanger connues du type susindiqué (FR-A-2 516 742 et FR-A-2 522 246), chaque batteur de chacun des deux jeux de batteurs est constitué par une tige métallique, du type corde à piano, dont les deux extrémités sont fixées rigidement à l'un des deux supports verticaux et longitudinaux, en forme de cadre, chaque cadre de support étant soit articulé sur le châssis de la machine autour d'un axe vertical situé à proximité de l'une de ses extrémités (Brevet FR-A-2 516 742), soit monté mobile sur le châssis par des moyens assurant le maintien permanent en position parallèle des deux cadres de support l'un par rapport à l'autre lors de leur mouvement d'oscillation (FR-A-2 522 246). Toutefois, bien qu'il soit prévu de réaliser les batteurs en corde à piano, leur possibilité de déformation élastique et, par suite, leur possibilité d'adaptation aux variations d'épaisseur de la végétation de la vigne ou à un désalignement de la machine par rapport à un rang de vignes est relativement faible. Ceci est si vrai que dans le brevet FR-A-2 516 742, il est prévu de relier chaque cadre de support, par l'intermédiaire du mécanisme de commande y associé, à l'extrémité inférieure d'un bras vertical articulé à son extrémité supérieure sur le châssis de la machine autour d'un axe horizontal et longitudinal. Chaque bras est rappelé dans une position verticale par l'action combinée d'une masse et d'un ressort. Avec un tel montage, en plus de leur mouvement transversal de va-et-vient sous l'action du mécanisme de commande, les deux cadres de support et les deux jeux de batteurs y associés peuvent s'écarter et se rapprocher automatiquement l'un de l'autre en fonction des variations de l'épaisseur de la végétation de la vigne lorsque la machine se déplace le long d'un rang de vignes, mais cette adaptation d'écartement des deux jeux de batteurs aux variations d;épaisseur de la végétation ne s'effectue que globalement pour chaque jeu de batteurs. En conséquence, lorsque les batteurs passent devant un plant de vigne dont la végétation présente une forte variation d'épaisseur dans le sens de la hauteur, l'écartement des deux jeux de batteurs se règle automatiquement sur la partie la plus épaisse de la végétation du plant de vigne. Il en résulte que les batteurs situés en regard des parties les moins épaisses de la végétation n'ont que peu ou pas du tout d'action sur ces parties de la végétation et que les raisins qui s'y trouvent sont récoltés en faible quantité ou pas du tout récoltés.

La présente invention a donc pour but de fournir une machine de récolte du type susindiqué, dans laquelle les organes secoueurs, en forme de tiges, sont capables de s'adapter individuellement aux variations d'épaisseur de la végétation des arbres et arbustes fruitiers, de telle sorte que le secouage soit efficace à tous les niveaux de la végétation.

A cet effet, la machine de récolte de la présente invention est caractérisée en ce que les tiges constituant les organes secoueurs sont en une matière ayant une grande flexibilité et sont courbées en forme d'arc, dont la convexité est tournée vers l'axe médian longitudinal de la machine, et en ce qu'au moins l'une des extrémités de chaque tige flexible est attachée au support correspondant en un point qui est mobile dans une certaine mesure dans une direction sensiblement parallèle audit axe médian longitudinal.

Suivant une forme possible d'exécution de la présente invention, chaque tige flexible a une de ses extrémités qui est fixée rigidement ou articulée à un point fixe du support correspondant, et son autre extrémité qui est attachée audit point mobile dans une direction sensiblement parallèle à l'axe médian longitudinal de la machine. Suivant une autre forme d'exécution possible, chaque tige flexible a ses deux extrémités qui sont attachées à des points mobiles dans une direction sensiblement parallèle audit axe médian longitudinal.

Du fait de la grande flexibilité des tiges et de leur forme arquée, et étant donné que les extrémités de chaque tige flexible sont attachées soit à un point fixe et à un point mobile dans une direction longitudinale, soit à deux points mobiles dans ladite direction longitudinale, chaque tige peut s'adapter élastiquement et individuellement, par flexion, aux variations d'épaisseur de la végétation des arbres et arbustes fruitiers. En conséquence, toutes les tige s agissent avec la même efficacité à tous les niveaux de la végétation pour en détacher les fruits, même si, pour un arbre ou arbuste donné, la végétation a une épaisseur variant de façon importante dans le sens de la hauteur. Par rapport aux machines à vendanger connues, dans lesquelles les batteurs sont constitués par des tiges métalliques dont les deux extrémités sont fixées rigidement aux cadres de support oscillants (brevets FR 2 516 742 et 22 522 246), les tiges flexibles de la machine de récolte de la présente invention ont, individuellement, une faculté nettement plus grande d'adaptation aux variations d'épaisseur de la végétation, à tous les niveaux de celle-ci, donc une plus grande efficacité du point de vue de la récolte des fruits.

D'autres caractéristiques et avantages de la présente invention ressortiront au cours de la description qui va suivre de diverses formes d'exécution de l'invention, données à titre d'exemples en référence aux dessins annexés sur lesquels :

La figure 1 est une vue en élévation latérale, avec arrachement partiel, montrant une machine à vendanger équipée d'un ensemble de secouage conforme à la présente invention.

La figure 2 est une vue en élévation de face, avec arrachement partiel, de la machine à vendanger de la figure 1.

La figure 3 montre schématiquement, en vue de dessus et à plus grande échelle, l'ensemble de secouage de la machine des figures 1 et 2.

La figure 4 est une vue en élévation latérale montrant une partie de l'ensemble de secouage de la machine des figures 1 et 2.

La figure 5 est une vue en perspective de la partie de l'ensemble de secouage montrée dans la figure 4.

La figure 6 montre comment les tiges flexibles de l'ensemble de secouage agissent sur un arbre ou arbuste fruitier; tel qu'un plant de vigne.

La figure 7 est une vue semblable à la figure 3 montrant une seconde forme d'exécution de l'ensemble de secouage.

La figure 8 est une vue en élévation latérale d'une partie de l'ensemble de secouage de la figure 7.

La figure 9 est une vue semblable aux figures 3 et 7, montrant une troisieme forme d'exécution de l'ensemble de secouage.

La figure 10 est une vue en élévation latérale d'une partie de l'ensemble de secouage de la figure 9.

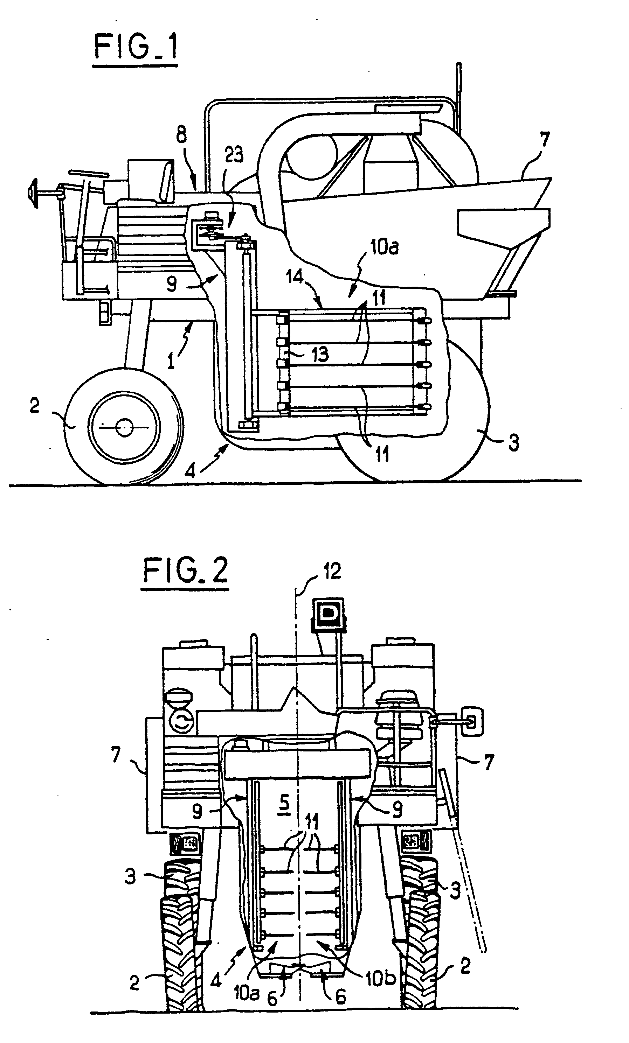

La machine de récolte représentée dans les figures 1 et 2 comprend, de façon connue, un châssis 1 équipé de roues avant 2 et de roues arrière 3 pour lui permettre de rouler sur le sol, et qui a la forme d'un portique ce façon à pouvoir enjamber un rang de cultures. Le châssis 1 porte, de façon connue, un ensemble de récolte 4 comportant un ensemble de secouage 5 et deux convoyeurs élévateurs 6 pour recueillir les raisins détachés par l'ensemble de secouage 5 et pour les acheminer jusqu'à au moins un bac de stockage temporaire 7 (généralement deux bacs sont prévus respectivement de part et d'autre de la machine), ainsi qu'un moteur 8 fournissant la puissance nécessaire à l'entraînement des divers organes actifs de la machine et aussi à l'entraînement des roues de celles-ci dans le cas où il s'agit d'une machine autopropulsée.

L'ensemble de récolte 4 peut être fixé de manière permanente au châssis 1 de la machine ou il peut être réalisé sous la forme d'un ensemble amovible, fixé de manière détachable au châssis 1 pour pouvoir être remplacé par d'autres équipements ou accessoires, tels que équipement de pulvérisation, équipement de taille, équipement de travail du sol, etc. Selon le cas, l'ensemble de récolte 4 peut être supporté directement par le châssis 1 de la machine ou par un châssis auxiliaire 9. De façon connue, le châssis auxiliaire 9 peut être fixé par rapport au châssis 1 ou il peut être monté de manière pendulaire, à sa partie supérieure, autour d'un axe horizontal et longitudinal.

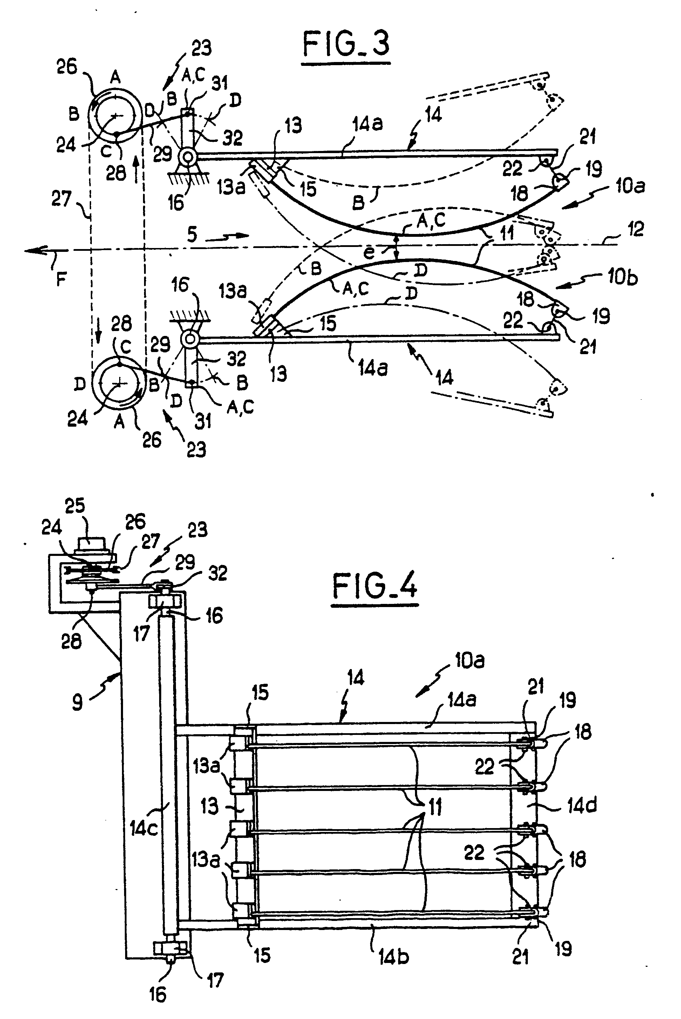

Comme cela est plus particulièrement visible dans la figure 2, l'ensemble de secouage 5, qui est plus spécialement concerné par l'invention, comporte deux jeux 10a et 10b d'organes secoueurs 11, les deux jeux 10a et 10b étant disposés en vis-a-vis respectivement de part et d'autre du plan médian longitudinal 12 de la machine. Comme cela est plus particulièrement visible dans la figure 4, chaque jeu, comme le jeu 10a, peut comporter par exemple cinq organes secoueurs 11, qui sont espacés verticalement les uns au-dessus des autres et qui s'étendent en gros horizontalement, bien qu'ils pourraient être aussi inclinés vers le bas de l'avant vers l'arrière de la machine. Bien que l'ensemble de secouage 5 représenté sur les figures 1 a 5 comporte deux fois cinq organes secoueurs, il va de soi que l'invention n'est pas limité à un tel nombre d'organes secoueurs, mais que ce nombre peut être plus petit ou plus grand selon la type d'arbres ou arbustes fruitiers et, pour un même type d'arbres ou arbustes fruitiers, selon la variété, le mode de conduite et la forme de la végétation des arbres ou arbustes fruitiers, ou encore selon que l'on désire secouer le tronc ou la végétation des arbres ou arbustes fruitiers.

Chaque organe secoueur 11 est constitué par une tige ayant une section très faible par rapport à sa longueur, en une matière très souple et déformable, telle que par exemple une résine polyester armée de fibre de verre, ou un polyamide. Dans le cas de la vigne, de bons résultats ont été obtenus avec des tiges ayant une section circulaire de 25mm de diamètre et une longueur de 2m, en un polyamide de type 6, dont le module d'élasticité E était égal a 300 N/mm$^2$.

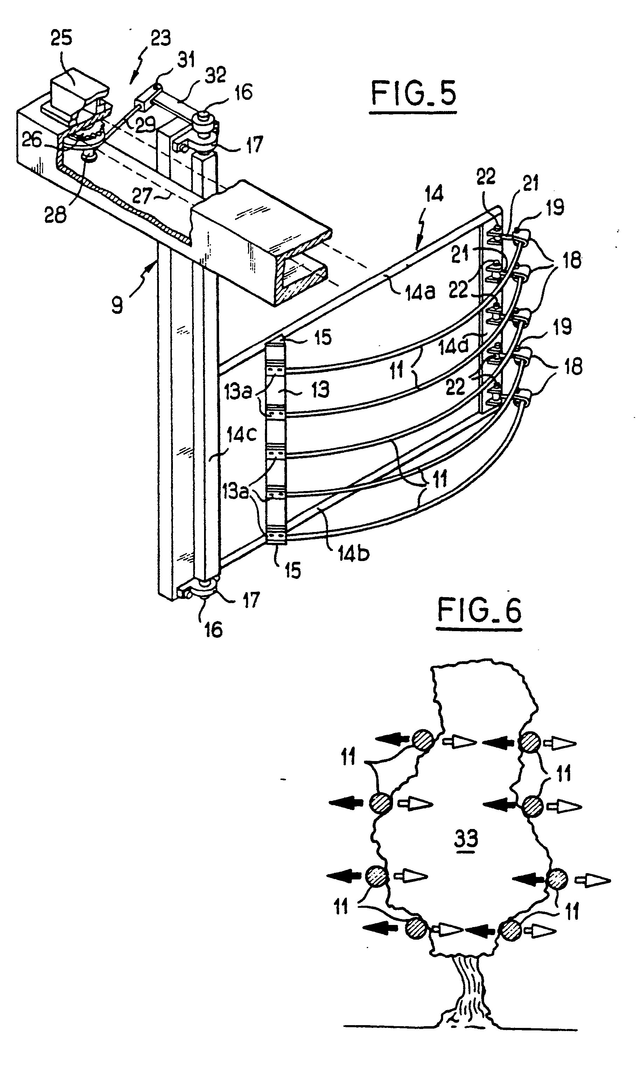

Comme cela est plus particulièrement visible dans les figures 3 et 5, chaque tige 11 est courbée en forme d'arc. On peut utiliser des tiges précourbées au moment de leur fabrication ou des tiges rectilignes, qui sont courbées par flexion au moment de leur montage dans l'ensemble de secouage 5.

Comme cela est plus particulièrement visible dans les figures 3 à 5, l'une des extrémités de chaque tige 11 est fermement serrée dans une pince 13a fixée rigidement à une plaque verticale de support 13 (une plaque 13 étant prévue pour chacun des deux jeux 10a et 10b de tiges 11). Chaque plaque 13 est fixée rigidement par ses extrémités aux côtés horizontaux 14a et 14b d'un cadre rectangulaire de support 14 (un cadre 14 étant prévu pour chacun des deux jeux 10a et 10b). Plus précisement, chaque extrémité de chaque plaque 13 est fixée, par exemple par soudage, à une pièce de support 15, de forme triangulaire, elle-même fixée, par exemple par soudage, au côté 14a ou 14b du cadre 14, de telle façon que la plaque 13 fasse un angle prédéterminé, par exemple environ 45°, avec le plan du cadre 14 comme montré dans la figure 3. Le côté vertical 14c de chaque cadre 14 est pourvu, à chacune de ses extrémités, d'un tourillon 16, d'axe vertical, monté à rotation dans un palier 17 fixé au châssis auxiliaire 9. L'autre extrémité de chaque tige 11 est fixée dans un support 18 qui est articulé par un axe vertical 19 sur l'une des extrémités d'une courte biellette 21, qui s'étend en gros transversalement par rapport à l'axe médian longitudinal 12 et dont l'autre extrémité est articulée sur l'autre côté vertical 14d du cadre 14 par un axe vertical 22.

Deux dispositifs d'entraînement 23 à mouvement alternatif sont reliés aux cadres de support 14, respectivement, pour les faire osciller autour de l'axe de leurs tourillons respectifs 16. Chacun des deux dispositifs d'entraînement 23 peut être par exemple constitué par un système à bielle et manivelle, dont l'arbre 24, d'axe vertical, est monté à rotation dans un palier 25 (figures 4 et 5) fixé au châssis auxiliaire 9. L'un des deux arbres 24 peut être entraîné en rotation par une transmission appropriée (non montrée) reliée à l'arbre de sortie d'un moteur, par exemple le moteur 8 de la machine de récolte. Les deux arbres 24 tournent dans le même sens et sont synchronisés en rotation par une transmission constituée par deux poulies 26, calées respectivement sur les arbres 24, et par une chaîne sans fin 27. Sur le maneton 28 de chaque système à bielle et manivelle 23 s'articule l'une des extrémités d'une bielle 29, dont l'autre extrémité est articulée par un axe 31 sur un bras horizontal 32. L'un des deux bras 32 est fixé rigidement au tourillon supérieur 16 du cadre 14 supportant le jeu 10a de tiges 11, tandis que l'autre bras 32 est fixé rigidement au tourillon supérieur 16 du cadre 14 supportant le jeu 10b de tiges 11. Comme montré dans la figure 3, les manetons 28 des deux systèmes à bielle et manivelle 23 occupent, par rapport à leurs arbres respectifs 24, des positions décalées angulairement de 180°.

De préférence, chacune des deux bielles 29 est réalisée sous la forme d'une tige de longeur réglable de façon connue pour permettre un ajustement de l'écartement e entre les tiges flexibles 11 des deux jeux 10a et 10b.

Dans ce qui suit, on supposera que la direction d'avance de la machine de récolte est celle indiquée par la flèche F dans la figure 3. Dans ces conditions, les plaques de support 13 se trouvent à l'extrémité avant des tiges 11, tandis que les supports 18 et les biellettes 21 se trouvent à l'extrémité arrière des tiges 11. Dans ces conditions, du fait de leur forme arquée, les tiges flexibles 11 des deux jeux 10a et 10b forment entre elles, de l'avant vers l'arrière de la machine, un convergent d'entrée pour les arbres et arbustes fruitiers, suivi d'une zone active de secouage (dans la région intermédiaire des tiges 11), elle-même suivie d'un divergent de sortie pour les arbres ou arbustes fruitiers.

Dans la figure 3, les lettres A, B, C et D indiquent les positions prises par les divers éléments de l'ensemble de secouage 5 pour les quatre positions angulaires A,B,C et D des systèmes d'entraînement à bielle et manivelle 23. D'après la figure 3, il est clair qu'au cours de la rotation des manetons 28 autour de l'axe des arbres 24, le cadre 14 supportant le jeu 10a de tiges 11 se rapproche de l'axe médian longitudinal 12 quand le cadre 14 supportant le jeu 10b de tiges 11 s'écarte dudit axe 12, et vice-versa, de telle sorte que la zone active de secouage, dans la région intermédiaire des tiges 11, se déplace transversalement en va-et-vient de part et d'autre dudit axe médian longitudinal 12. L'amplitude du mouvement transversal de la partie active des tiges flexibles 11 dépend de l'excentricité des manetons 28 par rapport aux axes des arbres 24. De préférence, l'excentricité des manetons 28 peut être réglée de façon connue, pour permettre un réglage de l'amplitude du mouvement transversal de la partie active des tiges flexibles 11. De préférence, comme déjà indiqué plus haut, les deux bielles 29 sont réalisées sous la forme de tiges de longueur réglable, pour permettre aussi un ajustement de la position moyenne (position A, C) des tiges 11 de telle façon que, dans cette position, les parties actives des tiges des deux jeux 10a et 10b, respectivement, soient disposées symétriquement par rapport à l'axe médian longitudinal 12.

La figure 6 montre comment les tiges flexibles 11 de l'ensemble de secouage 5 de la machine de récolte de la présente invention peuvent s'adapter individuellement à l'épaisseur de la végétation 33 d'un arbre ou arbuste fruitier tel qu'on plant de vigne. Ceci peut être expliqué de la manière suivante. Lorsqu'un plant de vigne arrive dans le convergent d'entrée entre les deux jeux 10a et 10b de tiges 11 la végétation applique des forces aux tiges 11 qui, grâce à leur grande flexibilité, se déforment élastiquement et individuellement par flexion dans la région des pinces 13a en s'écartant plus ou moins de l'axe médian longitudinal 12 selon l'épaisseur de la végétation au niveau de chaque tige 11. Cette déformation par flexion est facilitée en outre par la présence des biellettes 21 qui peuvent pivoter vers l'arrière autour de leurs axes 22, permettant ainsi aux tiges 11 de "s'allonger" vers l'arrière (leur courbure moyenne diminue). En d'autres termes, l'extrémité arrière des tiges 11 est mobile, dans la mesure permise par le pivotement des biellettes 21 autour des axes 22, dans une direction sensiblement parallèle à l'axe médian longitudinal 12.

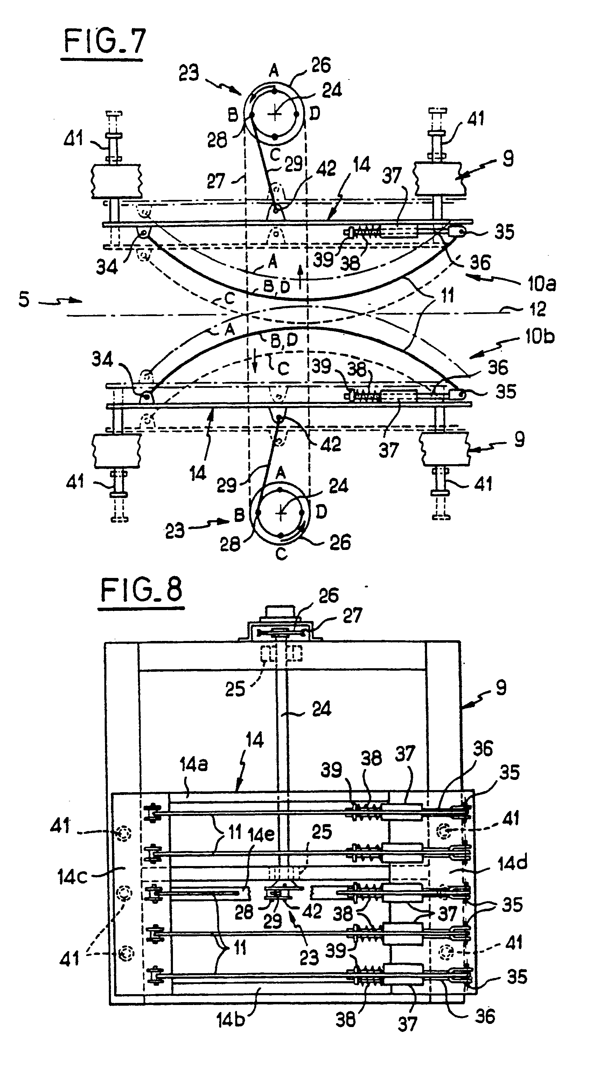

Les figures 7 et 8 montrent une autre forme d'exécution de l'ensemble de secouage 5, dans laquelle les éléments qui sont identiques ou qui jouent le même rôle que ceux de l'ensemble de secouage des figures 1 à 5 sont désignés par les mêmes numéros de référence et ne seront pas décrits à nouveau en détail. Dans les figures 7 et 8, chaque tige flexible 11 a une de ses extrémités qui est articulée par un axe vertical 34 sur le cadre de support 14, et son autre extrémité qui est articulée par un axe vertical 35 sur l'une des extrémités d'une tige cylindrique horizontale 36, qui s'étend en gros parallèlement à l'axe médian longitudinal 12 et qui est montée coulissante dans une douille cylindrique 37 fixée au cadre 14.

Si les tiges 11 sont courbées par flexion au moment de leur montage dans l'ensemble de secouage 5, un organe élastique, tel qu'un ressort hélicoïdal 38, est associé à chaque tige coulissante 36 pour maintenir la tige 11 correspondante à l'état fléchi avec la courbure initiale désirée. Chaque ressort 38 est monté concentriquement autour de la tige coulissante 36 entre la douille 37 et une butée 39 solidaire de la tige coulissante 36. La butée 39 peut être avantageusement constituée par un écrou vissé sur une partie filetée de la tige coulissante, pour permettre un réglage de la force du ressort 38 et, par suite, un réglage de la courbure initiale de la tige flexible 11 reliée à la tige coulissante 36. Bien que les ressorts 38 ne soient pas nécessaires dans le cas où les tiges 11 sont précourbées au moment de leur fabrication, il peut être néanmoins intéressant, même dans ce cas, de prévoir les ressorts 38 et les écrous 39 pour permettre un réglage de la courbure des tiges 11.

Chacun des deux cadres de support 14 est monté mobile en translation par rapport au châssis auxiliaire 9, dans une direction perpendiculaire à l'axe médian longitudinal 12, au moyen de plusieurs tiges cylindriques parallèles 41 qui sont fixées par une de leurs extrémités au côté vertical 14c ou 14d du cadre 14 et qui sont montées coulissantes dans des douilles cylindriques (non montrées) fixées au châssis auxiliaire 9.

A chaque cadre de support 14 est associé un dispositif d'entraînement 23 à mouvement alternatif permettant de déplacer ledit cadre en translation transversalement par rapport à l'axe médian longitudinal 12. Chaque dispositif d'entraînement 23 peut être par exemple constitué par un système à bielle et manivelle, dont la bielle 29 est articulée par un axe 42 sur une traverse horizontale 14e du cadre 14 (figure 8). Les deux bielles 29 sont de préférence réalisées sous la forme de tiges de longueur réglable pour permettre un réglage de l'écartement des parties actives des tiges 11 des deux jeux 10a et 10b.

Les manetons 28 des deux systèmes d'entraînement à bielle et manivelle 23 associés aux cadres 14 sont montés avec des calages angulaires identiques sur les arbres respectifs d'entraînement 24. Comme dans le mode de réalisation des figures 1 a 5, les deux arbres 24 sont accouplés et synchronisés en rotation par une transmission comprenant une chaîne sans fin 27 et deux poulies à chaîne 26 calées respectivement sur les arbres 24. L'un des deux arbres 24 peut être entraîné en rotation par une transmission appropriée (non montrée) reliée par exemple à l'arbre de sortie du moteur 8 de la machine de récolte. De préférence, l'excentricité de chaque maneton 28 par rapport à l'arbre 24 correspondant peut être réglée de façon connue, pour permettre un réglage de l'amplitude du mouvement transversal de chaque cadre 14.

L'ensemble de secouage 5 des figures 7 et 8 fonctionne sensiblement de la même manière que celui des figures 1 à 5. En ce qui concerne la faculté, pour chaque tige flexible 11, de s'adapter individuellement par flexion à l'épaisseur de la végétation, cette faculté est due non seulement à la grande flexibilité des tiges 11, mais aussi au fait que les extrémités de chaque tige 11 ne sont pas fixées rigidement (encastrées) au cadre 14, mais articulées par des axes 34 et 35, et aussi au fait que l'une des extrémités de chaque tige 11 (celle qui est attachée à la tige coulissante 36) est mobile dans une certaine mesure dans une direction parallèle à l'axe médian longitudinal 12.

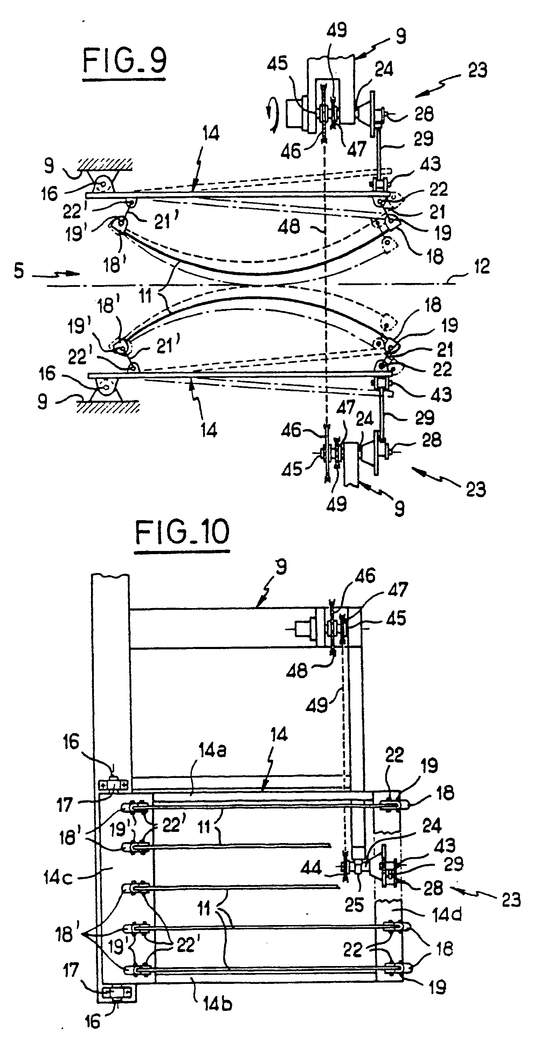

Les figures 9 et 10 montrent une autre forme d'exécution de l'ensemble de secouage 5, dans laquelle les éléments qui sont identiques ou qui jouent le même rôle que ceux qui sont montrés dans les figures 1 à 5, sont désignés par les mêmes numéros de référence, et ne seront donc pas décrits à nouveau en détail. L'ensemble de secouage des figures 9 et 10 diffère de celui des figures 1 à 5 en ce que, au lieu d'être fixée rigidement au cadre de support 14, l'extrémité avant de chaque tige flexible 11 est reliée au cadre 14 de la même manière que son extrémité arrière. Plus précisément, l'extrémité avant de chaque tige 11 s'articule par un axe vertical 19' sur l'une des extrémités d'une courte biellette 21', dont l'autre extrémité s'articule par un axe vertical 22' sur le côté vertical 14c du cadre 14. Dans ce cas, les deux extrémités de chaque tige 11 sont mobiles dans une direction sensiblement parallèle à l'axe médian longitudinal 12 dans la mesure permise par le pivotement des biellettes 21 et 21' autour de leurs axes respectifs 22 et 22'. De cette manière et du fait de leur grande flexibilité, les tiges 11 peuvent se déformer élastiquement par flexion pour s'adapter individuellement à l'épaisseur de la végétation au niveau de chaque tige 11.

Bien que dans le mode de réalisation des figures 9 et 10 les deux cadres 14 puissent être animés d'un mouvement d'oscillation autour des axes de leurs tourillons 16 respectifs par deux systèmes à bielle et manivelle 23 agencés de la même manière que celle montrée dans les figures 3 à 5, les figures 9 et 10 montrent une autre manière de relier les systèmes à bielle et manivelle 23 aux cadres 14. Dans ce cas, les deux arbres 24 s'étendent horizontalement et parallèlement à l'axe médian longitudinal 12 et chacun des deux systèmes à bielle et manivelle 23 est situé près du côté vertical arrière 14d du cadre 14, chaque bielle 29 étant articulés par un axe horizontal 43 sur le côté 14d du cadre 14 correspondant, près du milieu dudit côté. Sur chaque arbre 24 est fixée une poulie à chaîne 44. Deux autres arbres horizontaux et longitudinaux 45 sont montés à rotation dans des paliers appropriés fixés au châssis auxiliaire 9 et sont situés respectivement au dessus des arbres 24. L'un des deux arbres 45 est entraîné en rotation par une transmission appropriée reliée par exemple au moteur 8 de la machine. Sur chaque arbre 45 sont fixées deux poulies à chaîne 46 et 47. Une première chaîne sans fin 48 passe autour des deux poulies 46 pour synchroniser en rotation les deux arbres 45. Une deuxième chaîne sans fin 49 passe autour de l'une des deux poulies 47 et autour de la poulie 44 située verticalement au dessous de la poulie 47 susmentionnée, pour synchroniser en rotation les deux arbres 24 et 45 situés l'un au dessous de l'autre. De même une troisième chaîne sans fin 49 passe autour des deux autres poulies 44 et 47 pour synchroniser en rotation les deux autres arbres 24 et 45 également situés l'un au dessous de l'autre. De cette manière les arbres 24 tournent dans le même sens et à la même vitesse. En outre, dans ce cas, pour que les deux cadres se déplacent ensemble vers la gauche et vers la droite de la machine, les manetons 28 des deux systèmes à bielle et manivelle 23 sont calés dans des positions angulaires identiques par rapport à leurs arbres 24 respectifs.

Il va de soi que les formes d'exécution de la présente invention qui ont été décrites ci-dessus ont été données à titre d'exemple purement indicatif et nullement limitatif, et que de nombreuses modifications peuvent être facilement apportées par l'homme de l'art, sans pour autant sortir du cadre de l'invention telle qu'elle est définie dans les revendications suivantes. C'est ainsi notamment que, au lieu d'utiliser des systèmes à bielle et manivelle à titre de dispositif d'entraînement à mouvement alternatif, on peut utiliser aussi bien des vérins hydrauliques à double effet. En outre, bien que la présente invention ait été plus particulièrement décrite à propos d'une machine de récolte autopropulsée, il va de soi que l'invention s'applique tout aussi bien à des machines de récolte attelées à un tracteur

## Revendications

1. Machine pour la récolte de fruits, baies et similaires portés par des arbres et arbustes fruitiers plantés en ligne, comprenant un châssis enjambeur (1,9) mobile à travers champs, et au moins un ensemble de secouage (5) comportant deux supports (14) sensiblement verticaux et longitudinaux, qui sont espacés transversalement l'un de l'autre et situés respectivement de part et d'autre de l'axe médian longitudinal (12) de la machine, chacun des deux supports (14) étant monté mobile par rapport au châssis et portant un jeu (10a,10b) d'organes secoueurs (11) de forme allongée, espacés verticalement et s'étendant en gros horizontalement dans la direction dudit axe médian longitudinal, chaque organe secoueur (11) étant constitué par une tige dont les deux extrémités sont attachées à l'un des deux supports (14) et qui a une forme telle qu'elle définit avec les tiges (11) attachées à l'autre support (14), de l'avant vers l'arrière de la machine, un convergent d'entrée, une zone active de secouage et un divergent de sortie pour les arbres et arbustes fruitiers, et un mécanisme de commande (23) relié auxdits supports (14) pour les animer en synchronisme d'un mouvement de va-et-vient dans une direction transversale par rapport audit axe média longitudinal, caractérisée en ce que les tiges (11) sont en une matière ayant une grande flexibilité et sont courbées en forme d'arc, dont la convexité est tournée vers l'axe médian longitudinal (12) de la machine, et en ce que au moins l'une des extrémités de chaque tige flexible (11) est attachée au support correspondant (14) en un point (19;35) qui est mobile dans une certaine mesure dans une direction sensiblement parallèle audit axe médian longitudinal (12).

2. Machine selon la revendication 1, caractérisée en ce que chaque tige flexible (11) a une de ses extrémités qui est fixée rigidement audit support (14), et son autre extrémité qui est articulée par un premier axe vertical (19) sur l'une des extrémités d'une courte biellette horizontale (21), qui s'étend en gros transversalement par rapport à l'axe médian longitudinal (12) et dont l'autre extrémité est articulée sur le support (14) par un deuxième axe vertical (22).

3. Machine selon la revendication 1, caractérisée en ce que chaque tige flexible (11) a ses deux extrémités reliées par des courtes biellettes (21 et 21') audit support (14), chacune des deux biellettes (21 et 21') étant articulée sur la tige (11) par un premier axe vertical (19 et 19') et sur ledit support (14) par un second axe vertical (22 ou 22').

4. Machine selon la revendication 1, caractérisée en ce que chaque tige flexible (11) a une de ses extrémités qui est articulée par un premier axe vertical (34) sur ledit support (14), et son autre extrémité qui est articulée par un second axe vertical (35) sur l'une des extrémités d'une tige cylindrique horizontale (36), qui s'étend en gros parallèlement à l'axe médian longitudinal (12) et qui est montée coulissante dans une douille cylindrique (37) fixée audit support (14).

5. Machine selon la revendication 4, caractérisée en ce qu'à chaque tige coulissante (36) est associé un organe élastique (38) qui agit sur ladite tige coulissante dans un sens tel que la tige flexible (11) attachée à la tige coulissante soit maintenue à l'état fléchi avec une forme arquée.

6. Machine selon la revendication 5, caractérisée en ce que ledit organe élastique (38) est constitué par un ressort hélicoïdal, qui est monté concentriquement autour de la tige coulissante (36) entre la douille cylindrique (37) et une butée (39) solidaire de la tige coulissante.

7. Machine selon la revendication 6, caractérisée en ce que la butée (39) est constituée par un écrou qui est vissé sur une partie filetée de la tige coulissante (36).

8. Machine selon l'une quelconque des revendications 1 à 7, caractérisée en ce que les tiges flexibles (11) ont une longueur d'environ 2m et une section transversale circulaire d'un diamètre d'environ 25 mm.

9. Machine selon l'une quelconque des revendications 1 à 8, caractérisée en ce que les tiges flexibles (11) sont en un polyamide ayant un module d'élasticité d'environ 3000 N/mm².

## Claims

1. A machine for harvesting fruits, berries and the like produced by fruit trees and bushes planted in a row, comprising a straddling chassis (1, 9) which can move across fields, and at least one shaking unit (5) comprising two approximately vertical and longitudinal supports (14) which are spaced apart transversely and are situated one on either side respectively of the longitudinal median axis (12) of the machine, each of the two supports (14) being mounted so as to be movable in relation to the chassis and bearing a set (10a, 10b) of shaking devices (11) which are elongated in shape, are at a distance apart vertically and extend roughly horizontally in the direction of the said londitudinal median axis, each shaking device (11) being constituted by a rod the two ends of which are attached to one of the two supports (14) and the shape of which is such that together with the rods (11) attached to the other support (14) it defines, from the front to the back of the machine, an entry constriction, an active shaking zone and an exit widening for the fruit trees and bushes, and a control mechanism (23) linked to the said supports (14) to synchronously impel the latter to execute a to-and-fro movement in a transverse direction in relation to the said longitudinal median axis, characterized in that the rods (11) are made of a material with great flexibility and are curved in an arc shape the convexity of which is directed towards the longitudinal median axis (12) of the machine, and in that at least one of the ends of each flexible rod (11) is attached to the corresponding support (14) at a point (19; 35) which is movable to a certain extent in a direction which is approximately parallel to the said longitudinal median axis (12).

2. A machine in accordance with Claim 1, characterized in that one end of each flexible rod (11) is fixed rigidly to the said support (14) and the other end is articulated, by a first vertical spindle (19), on one of the ends of a short horizontal rocker bar (21) which extends roughly transverse in relation to the longitudinal median axis (12) and the other end of which is articulated on the support (14) by a second vertical spindle (22).

3. A machine in accordance with Claim 1, characterized in that the two ends of each flexible rod (11) are linked to the said support (14) by short rocker bars (21 and 21'), each of the two rocker bars (21 and 21') being articulated on the rod (11) by a first vertical spindle (19 or 19') and on the said support (14) by a second vertical spindle (22 or 22').

4. A machine in accordance with Claim 1, characterized in that one of the ends of each flexible rod (11) is articulated, by a first vertical spindle (34), on the said support (14) and the other end of each flexible rod is articulated, by a second vertical spindle (35), on one of the ends of a horizontal cylindrical rod (36) which extends roughly parallel to the longitudinal median axis (12) and which is slidably mounted in a cylindrical sleeve (37) fixed to the said support (14).

5. A machine in accordance with Claim 4, characterized in that an elastic component (38) is associated with each sliding rod (36) and acts on the said sliding rod in such a manner that the flexible rod (11) attached to the sliding rod is kept in the bent state with a curved shape.

6. A machine in accordance with Claim 5, characterized in that the said elastic component (38) is constituted by a helicoid spring which is concentrically mounted around the sliding rod (36), between the cylindrical sleeve (37) and a stop (39) firmly attached to the sliding rod.

7. A machine in accordance with Claim 6, characterized in that the stop (39) is constituted by a nut which is screwed onto a threaded part of the sliding rod (36).

8. A machine in accordance with any one of Claims 1 to 7, characterized in that the flexible rods (11) are about 2 m in length and have a circular cross-section with a diameter of about 25 mm.

9. A machine in accordance with any one of Claims 1 to 8, characterized in that the flexible rods (11) are made of a polyamide having an elastic modulus of about 3000 N/mm².

## Patentansprüche

1. Erntemaschine für Früchte, Beeren und dergleichen von in Reihen gepflanzten Obstbäumen und Sträuchern, mit einem hochliegenden, feldgängigen Chassis (1, 9) und mindestens einer Rütteleinrichtung (5), die zwei langgestreckte, etwa vertikale Träger (14) umfaßt, welche in Querrichtung voneinander beabstandet zu beiden Seiten der Längsmittelachse (12) der Maschine angeordnet sind, wobei jeder der Träger (14) gegenüber dem Chassis beweglich ist und einen Satz (10a, 10b) länglicher Rüttelorgane (11) trägt, die vertikal voneinander beabstandet sind und sich im wesentlichen horizontal in Richtung der Längsmittelachse erstrecken, und jedes Rüttelorgan (11) aus einer Stange besteht, deren beide Enden an einem der zwei Träger (14) festgelegt sind, der eine solche Form hat, daß er mit den an dem anderen Träger (14) festgelegten Stangen (11) von vorne nach hinten, bezogen auf die Maschine, einen konvergierenden Eintrittsbereich, einen aktiven Rüttelbereich und einen divergierenden Austrittsbereich für die Fruchtbäume und -büsche bildet, und ein Steuermechanismus (23) mit den Trägern (14) verbunden ist, der sie synchron in einer hin- und hergehenden Bewegung in Querrichtung zu der Längsmittelachse antreibt, dadurch gekennzeichnet, daß die Stangen (11) aus einem Werkstoff hoher Flexibilität bestehen und in Form eines Bogens gekrümmt sind, dessen konvexe Seite der Längsmittelachse (12) der Maschine zugewandt ist, und daß zumindest eines der Enden jeder flexiblen Stange (11) an dem entsprechenden Träger (14) in einem Punkt (19;35) festgelegt ist, der in einem gewissen Maß in einer zur Längsmittelachse (12) im wesentlichen parallelen Richtung geweglich ist.

2. Maschine nach Anspruch 1, dadurch gekennzeichnet, daß jede flexible Stange (11) mit einem ihrer Enden starr mit dem Träger (14) und mit ihrem anderen Ende schwenkbar um eine erste vertikale Achse (19) an einem der Enden eines kurzen waagerechten Schwingarmes (21) befestigt ist, der sich etwa quer zu der Längsmittelachse (12) erstreckt und dessen anderes Ende über eine zweite vertikale Achse (22) schwenkbar an dem Träger (14) befestigt ist.

3. Maschine nach Anspruch 1, dadurch gekennzeichnet, daß jede flexible Stange (11) mit ihren beiden Enden über kurze Schwingarme (21 und 21') mit dem Träger (14) verbunden ist, und daß jeder der zwei Schwingarme (21 und 21') an der Stange (11) über eine erste vertikale Achse (19 und 19') und an dem Träger (14) über eine zweite vertikale Achse (22 oder 22') angelenkt ist.

4. Maschine nach Anspruch 1, dadurch gekennzeichnet, daß jede flexible Stange (11) mit ihrem einen Ende über eine erste vertikale Achse (34) an dem Träger (14) und mit ihrem zweiten Ende über eine zweite vertikale Achse (35) an einem der Enden einer horizontalen, zylindrischen Stange (36) angelenkt ist, die sich etwa parallel zu der Längsmittelachse (12) erstreckt und gleitfähig in einer zylindrischen Buchse (37) montiert ist, die an dem Träger (14) befestigt ist.

5. Maschine nach Anspruch 4, dadurch gekennzeichnet, daß jeder gleitfähigen Stange (36) ein elastisches Organ (38) zugeordnet ist, das auf die gleitfähige Stange in einer solchen Richtung wirkt, daß die an deren gleitfähigen Stange befestigte flexible Stange (11) in einem gespannten Zustand in gebogener Form gehalten wird.

6. Maschine nach Anspruch 5, dadurch gekennzeichnet, daß das elastische Organ (38) eine Schraubenfeder ist, die die gleitfähige Stange (36) zwischen der zylindrischen Buchse (37) und einem mit der gleitfähigen Stange fest verbundenen Anschlag (39) konzentrisch umgibt.

7. Maschine nach Anspruch 6, dadurch gekennzeichnet, daß der Anschlag (39) aus einer Mutter besteht, die auf einen mit Gewinde versehenen Teil der gleitfähigen Stange (36) geschraubt ist.

8. Maschine nach einem der Ansprüche 1 bis 7, dadurch gekennzeichnet, daß die flexiblen Stangen (11) eine Länge von etwa 2 m und einen kreisförmigen Querschnitt mit einem Durchmesser von etwa 25 mm haben.

9. Maschine nach einem der Ansprüche 1 bis 8, dadurch gekennzeichnet, daß die flexiblen Stangen (11) aus einem Polyamid mit einem Elastizitätsmodul von etwa 300 N/mm² bestehen.

## FIG.1

## FIG.2

## FIG_3

## FIG_4

FIG.5

FIG.6

## FIG. 7

## FIG. 8

FIG.9

FIG.10

14